# EUROPEAN PATENT APPLICATION

(11) **EP 1 892 710 A1**
(43) Date of publication of application: **27.02.2008**
(21) Application number: 07110104.2
(22) Date of filing: 12.06.2007
(51) Int. Cl.: G11B 17/04

(54) **Optical disc drive and control method thereof**

(30) Priority: 21.08.2006 KR 20060079017
(71) Applicant: Samsung Electronics Co., Ltd., Suwon-si 442-742 Gyeonggi-do (KR)
(72) Inventor: Seo, Mun Kyu, Suwon-si, Gyeonggi-do (KR)
(74) Representative: Brandon, Paul Laurence

(57) **Abstract**

An optical disc drive and a method of controlling the same, capable of receiving or ejecting an optical disc (1) in either direction thereof to easily insert and exchange the optical disc. The optical disc drive includes a main body (10) provided on opposite sides thereof with first and second openings (11, 12) for receiving or ejecting an optical disc, a spindle motor (15) installed in the main body and having a chuck (16) to mount the optical disc, and a loading unit provided in the main body to move the optical disc inserted through any one of the first and second openings toward the spindle motor, and to eject the optical disc on the spindle motor through any one of the first and second openings.

## Description

The present general inventive concept relates to an optical disc drive and a method of controlling the same.

An optical disc drive reads and/or records various types of information, such as voice, images, and data, audio, from and/or onto a disc. An example of the optical disc drive is disclosed in Korean Patent No. 10-568378, titled Slot-in Type Disc Drive that has no tray.

The optical disc drive disclosed in the above patent includes a main body that has a gate into or from which an optical disc is inserted or ejected, a roller type loading unit that moves the optical disc toward a spindle motor in the main body when the optical disc has been inserted into the gate, or ejects the optical disc out of the optical disc drive, and a plurality of sensors that detect whether the optical disc is inserted.

However, the optical disc drive causes inconvenience when inserting or ejecting the optical disc, because the gate for the optical disc is provided only on one side of the optical disc drive. Specifically, in order to mount a new optical disc, the optical disc existing in the main body should be ejected through the gate, and then the new optical disc should be inserted through the same gate. Such a mechanism causes inconvenience when exchanging the optical disc with the new optical disc.

The present general inventive concept provides an optical disc drive and a method of controlling the same, capable of receiving or ejecting an optical disc in either direction thereof to allow a user to easily insert and exchange the optical disc.

The present general inventive concept also provides an optical disc drive and a method of controlling the same, capable of simultaneously receiving and ejecting an optical disc.

Additional aspects and utilities of the present general inventive concept will be set forth in part in the description which follows and, in part, will be obvious from the description, or may be learned by practice of the general inventive concept.

The foregoing and/or other aspects and utilities of the present general inventive concept may also be achieved by providing an optical disc drive, which includes a main body provided on opposite sides thereof with first and second openings to insert and eject an optical disc, a spindle motor installed in the main body and having a chuck to mount the optical disc, and a loading unit provided in the main body to move the optical disc inserted through one of the first and second openings toward the spindle motor, and to eject the optical disc on the spindle motor through one of the first and second openings.

The loading unit may include a first roller assembly installed on a side of the first opening, a second roller assembly installed on a side of the second opening, and an elevation assembly to mount and demount the optical disc on and from the chuck of the spindle motor.

The first roller assembly may include a first roller, which is movable up and down, and a first loading motor to rotate the first roller in forward and reverse directions. The second roller assembly may include a second roller, which is movable up and down, and a second loading motor to rotate the second roller in forward and reverse directions.

The elevation assembly may include a movable member formed at both sides thereof, with first and second slanted portions to move the first and second rollers up and down while moving in a transverse direction, a third loading motor connected with the movable member using a rack and a pinion to move the movable member, and a chucking unit that allows the optical disc to be mounted or demounted on or from the chuck according to the movement of the movable member.

The chucking unit may include a pressing member that is movable up and down to press or release a top surface of the optical disc, and a third slanted portion formed on the movable member to move the pressing member up and down.

The optical disc drive may include a first guide unit that is installed on the side of the first opening to guide the optical disc being inserted or ejected through the first opening, and a second guide unit that is installed on the side of the second opening to guide the optical disc being inserted or ejected through the second opening.

The first and second guide units may include rotating levers rotatably installed on opposite sides of the first and second openings, guide pins provided on free ends of the rotating levers, respectively, so as to make contact with an outer circumference of the optical disc inserted or ejected through the first and second openings, and elastic members that apply rotational force to the rotating levers in order to rotate the rotating levers such that the guide pins are brought into contact with the outer circumference of the optical disc.

The optical disc drive may further include first and second sensors installed on the rotating levers adjacent to the first and second openings, respectively, in order to detect the optical disc being inserted or ejected through the first and second openings, respectively.

The optical disc drive may further include a third sensor to detect the movement of the movable member to detect the mounting state of the optical disc.

The optical disc drive may further include first and second sensors to detect the optical disc being inserted or ejected through the first and second openings, respectively, and a third sensor to detect whether the optical disc is mounted on the chuck of the spindle motor.

The foregoing and/or other aspects and utilities of the present general inventive concept may also be achieved by providing a method of controlling an optical disc drive. The method includes the steps of detecting a first optical disc being inserted into a main body through one of first and second openings provided on opposite sides of the main body, determining whether a second optical disc exists in the main body when the first optical disc is inserted through the one of the first and second openings is detected, and operating a loading unit installed in the main body to move and mount the first optical disc in the main body when the second optical disc does not exist in the main body.

The foregoing and/or other aspects and utilities of the present general inventive concept may also be achieved by providing a method of controlling an optical disc drive. The method includes the steps of detecting a first optical disc being inserted into a main body through one of first and second openings provided on opposite sides of the main body, determining whether a second optical disc exists in the main body when the first optical disc through the one of the first and second openings is detected, operating a loading unit installed in the main body to eject the second optical disc through one of the first and second openings, which does not receive the first optical disc, while the first optical disc is inserted into a predetermined portion of the main body, detecting whether the second optical disc is removed from the main body, and operating the loading unit to completely move and mount the first optical disc in the main body when the second optical disc is removed from the main body.

The ejecting of the second optical disc may include stopping the operation of the loading unit when the second optical disc is detected through a sensor installed on a side of one of the first and second openings to prevent the second optical disc from being completely ejected from the main body.

The foregoing and/or other aspects and utilities of the present general inventive concept may also be achieved by providing a method of controlling an optical disc drive, the method including receiving an optical disc through one of first and second openings disposed on opposite sides of a main body to be mounted on a chuck of a spindle motor, and moving the optical disc to the spindle motor and ejecting the optical disc through the other on of the first and second openings of the main body.

The foregoing and/or other aspects and utilities of the present general inventive concept may also be achieved by providing a method of controlling a main body of an optical disc drive, the method including receiving a first optical disc in a first opening in the main body, and mounting the first optical disc onto a spindle motor if a second optical disc is not mounted thereon, otherwise mounting the first optical disc onto the spindle motor after the second optical disc is demounted from the spindle motor and ejected from and ejecting the second optical disc from a second opening in the main body.

The receiving of the first optical disc and the ejecting of the second optical disc may include simultaneously receiving the first optical disc and ejecting the second optical disc.

The foregoing and/or other aspects and utilities of the present general inventive concept may also be achieved by providing an optical disc drive, including a main body with a first and a second opening, a first sensor to detect a first optical disc when it is inserted or ejected through the first opening, a second sensor to detect a second optical disc when it is inserted or ejected through the second opening, and a third sensor to detect a mounting state of the first or second optical disc.

The optical disc drive may further include a first rotating lever to contact an outside circumference of the first optical disc upon insertion or ejection of the first optical disc, and a second rotating lever to contact an outside circumference of the second optical disc upon insertion or ejection of the second optical disc.

The optical disc drive may further include a spindle motor onto which the second optical disc is mounted, and a movable member to mount the second optical disc onto the spindle motor, or demount the second optical disc from the spindle motor, wherein the second optical disc is demounted from the spindle motor and ejected through the second opening when the first optical disc is inserted through the first opening.

The foregoing and/or other aspects and utilities of the present general inventive concept may also be achieved by providing an optical disc drive including a main body having a first opening and a second opening, a spindle motor having a chuck, and a loading unit to load an optical disc from the first opening to the chuck in a first direction and to unload the optical disc from the chuck to the second opening in a second direction.

The first direction and the second direction may be the same.

The first opening and the second opening may be disposed opposite to each other with respect to the chuck.

The loading unit may include a plurality of rollers to rotate and to move up and down to move the optical disc toward or away from the chuck, a pressing member to move up and down and to mount the optical disc on the chuck, and a movable member to move horizontally with respect to the pressing member, to move the plurality of rollers and the pressing member up and down.

The foregoing and/or other aspects and utilities of the present general inventive concept may also be achieved by providing an optical disc drive, including a main body with at least one opening, a spindle motor having a chuck, and a loading unit to load a first optical disc from the at least one opening to the chuck in a first direction and to simultaneously unload a second optical disc from the chuck to the at least one opening in a second direction.

The foregoing and/or other aspects and utilities of the present general inventive concept may also be achieved by providing an optical disc drive, including a main body with at least one opening, a sensor to detect when a first optical disc is inserted into the at least one opening, and an ejecting member to eject a second disc from the at least one opening when the sensor detects the insertion of the first optical disc.

The foregoing and/or other aspects and utilities of the present general inventive concept may also be achieved by providing an optical disc drive, including a main body with at least one opening, a spindle motor having a chuck, a mounting member to mount a disc onto the chuck, a sensor to detect when another optical disc is inserted into the at least one opening, and an ejecting member to demount the mounted disc from the chuck and to eject the demounted disc from the at least one opening when the sensor detects the insertion of the another optical disc.

The present general inventive concept will become apparent and more readily appreciated from the following description of the embodiments, by way of example only, taken in conjunction with the accompanying drawings of which:
FIG. 1 is an exploded perspective view illustrating an optical disc drive according to an embodiment of the present general inventive concept;
FIG. 2 is a sectional view taken line A-A' of FIG. 1, when an optical disc is inserted into the optical disc drive;
FIG. 3 is a sectional view taken line A-A' of FIG. 1, when an optical disc is mounted in a main body;
FIG. 4 is a view illustrating an elevation assembly of an optical disc drive according to an embodiment of the present general inventive concept, when first and second rollers are moved up;
FIG. 5 is a view illustrating an elevation assembly of an optical disc drive according to an embodiment of the present general inventive concept, when first and second rollers are moved down;
FIGS. 6 and 7 are plan views illustrating an optical disc drive according to an embodiment of the present general inventive concept, wherein an optical disc is inserted step by step when the optical disc does not exist in a main body;
FIGS. 8 and 9 are plan views illustrating an optical disc drive according to an embodiment of the present general inventive concept, when an optical disc is inserted or ejected while another optical disc exists in a main body;
FIG. 10 is a view illustrating an example of an audio and video appliance to which an optical disc drive according to an embodiment of the present general inventive concept is applied;
FIG. 11 is a control block diagram illustrating an optical disc drive according to an embodiment of the present general inventive concept; and
FIG. 12 is a flow chart illustrating a process of controlling an optical disc drive according to an embodiment of the present general inventive concept.

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

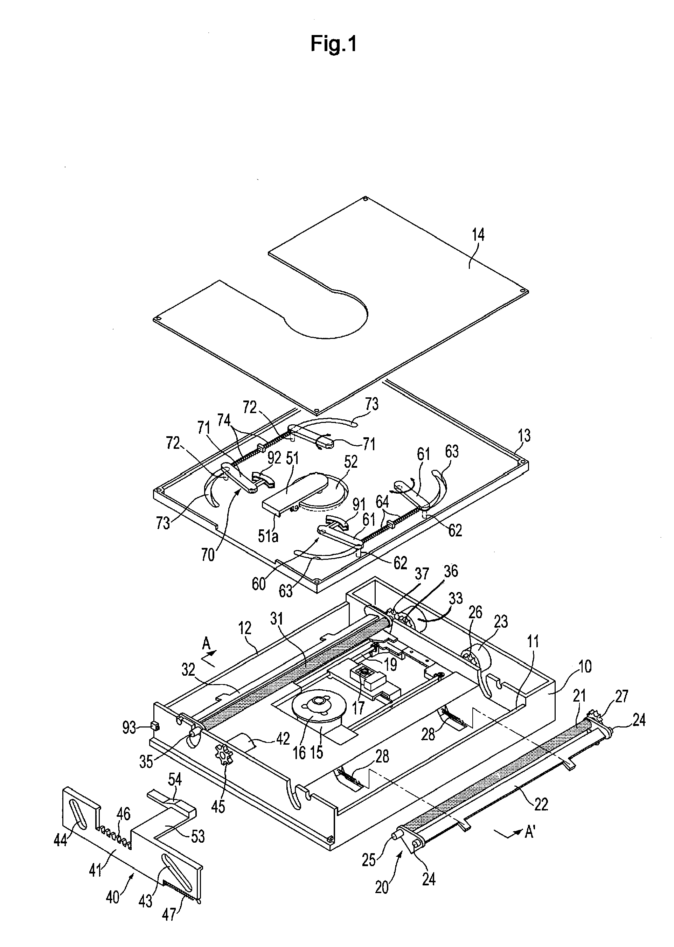

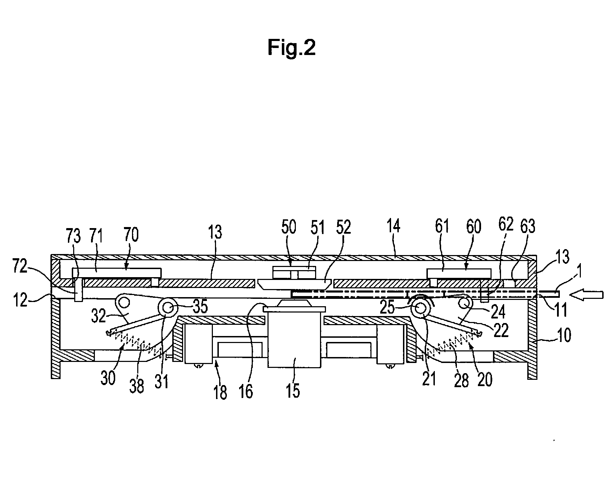

As illustrated in FIGS. 1 and 2, an optical disc drive according to an embodiment of the present general inventive concept includes a main body 10, which has first and second openings 11 and 12 to receive or eject an optical disc 1 on opposite sides thereof. Provided above the main body 10 are a first cover 13 to cover an upper portion of the main body 10, and a second cover 14 to cover an upper portion of the first cover 13.

The main body 10 is provided therein with a spindle motor 15 having a chuck 16 to mount the optical disc 1, an optical pickup unit 17 to read or record information from or on the optical disc 1, and a pickup transfer unit 18 to move the optical pickup unit 17. The optical pickup unit 17 is installed on one side of the spindle motor 15, and the pickup transfer unit 18 moves the optical pickup unit 17 in a radial direction of the optical disc 1.

The pickup transfer unit 18 includes rails 19 to guide movement of the optical pickup unit 17, and a driving unit (not illustrated) to move the optical pickup unit 17. Although not illustrated in the figures, the driving unit includes a driving motor, and a spiral transfer shaft or a rack and pinion assembly that converts a rotational motion of the driving motor into a linear motion.

The main body 10 is provided with a loading unit, which moves the optical disc 1 inserted through any one of the first and second openings 11 and 12 toward the spindle motor 15 to mount the optical disc 1 on the spindle motor 15, or ejects the optical disc 1 mounted on the spindle motor 15 through any one of the first and second openings 11 and 12. The loading unit includes a first roller assembly 20 installed on a side of the first opening 11, a second roller assembly 30 installed on a side of the second opening 12, and an elevation assembly 40 to mount and demount the optical disc 1 on and from the chuck 16 of the spindle motor 15.

The first roller assembly 20 includes a first roller 21, a first roller supporting member 22 that supports the first roller 21 to allow the first roller 21 to move up and down, and a first loading motor 23 that rotates the first roller 21 in forward and reverse directions. The first roller supporting member 22 is disposed in and parallel to the first opening 11, and includes both ends rotatably coupled to a supporting shaft 24. The first roller 21 is provided with a rotational shaft 25, opposite ends of which are rotatably supported on opposite sides of the first roller supporting member 22. The rotational shaft 25 of the first roller 21 is spaced apart from the supporting shaft 24 of the first roller supporting member 22. Accordingly, when the first roller supporting member 22 rotates, the first roller 21 moves up or down. The first loading motor 23 is installed on one side of the first roller 21, and has a driving gear 26. The rotational shaft 25 of the first roller 21 has a driven gear 27 to engage with the driving gear 26 of the first loading motor 23. When the first roller 21 moves up, the driven gear 27 engages with the driving gear 26 of the first loading motor 23. In contrast, when the first roller 21 moves down, the driven gear 27 is released from the driving gear 26 of the first loading motor 23. Therefore, rotational force of the first loading motor 23 is delivered to the first roller 21 when the first roller 21 moves up and thus the driving gear 26 engages with the driven gear 27. Furthermore, the first roller assembly 20 includes springs 28 to apply another rotational force to the first roller supporting member 22 to rotate the first roller supporting member 22 with respect to the supporting shaft 24 such that the first roller 21 moves up. As illustrated in FIG. 2, first ends of the springs 28 are fixed to the main body 10, and second ends of the springs 28 are fixed to the first roller supporting member 22.

The second roller assembly 30 includes a second roller 31, a second roller supporting member 32 that supports the second roller 31 to allow the second roller 31 to move up and down, and a second loading motor 33 that rotates the second roller 31 in forward and reverse directions. In addition, the second roller assembly 30 includes driving and driven gears 36 and 37 to transmit power, and springs 38 to rotate the second roller supporting member 32. The second roller 31 receives a rotation force from the second loading motor 33 when moving up. The second roller assembly 30 may differ from the first roller assembly 20. However, the first roller assembly 20 and the second roller assembly 30 may be identical since the second roller assembly 30 is installed on the side of the second opening 12, and thus it has the construction and operational principle identical to those of the first roller assembly 20.

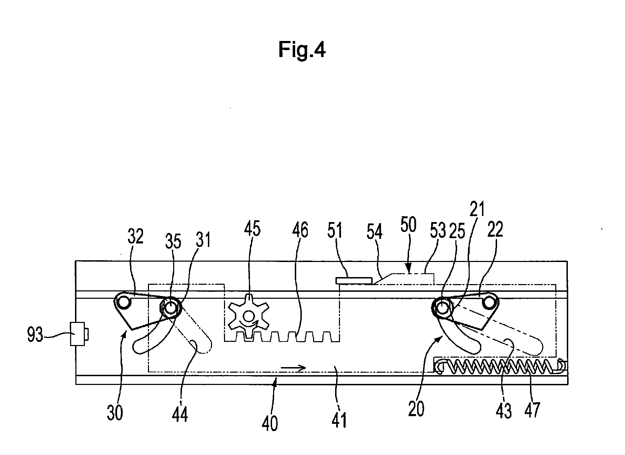

As illustrated in FIGS. 1 and 4, the elevation assembly 40 includes an movable member 41 that is installed on one side of the main body 10 to move in a direction , a third loading motor 42 that moves the movable member 41, and a chucking unit 50 that allows the optical disc 1 to be mounted or demounted on or from the chuck 16 of the spindle motor 15 as the movable member 41 moves in a transverse direction.

The direction and the transverse direction of the movable member may be a direction connecting the first and second rollers 21 and 31, a direction intersecting with the longitudinal directions of the first and second rollers 21 and 31, or a direction connecting the first and second openings 11 and 13.

The movable member 41 has the shape of a flat plate, and is formed on opposite sides thereof with first and second slanted sections 43 and 44, to which the rotational shafts 25 and 35 of the first and second rollers 21 and 31 are coupled, respectively.

The first and second slanted sections 43 and 44 have the shape of a slanted slot.

The slanted slot may be a linear slot or a curved slot. The respective slanted slots may have different inclined angles. The third loading motor 42 has a shaft to which a pinion 45 is coupled, and the movable member 41 is formed with a rack gear 46, which engages with the pinion 45. Furthermore, the movable member 41 is equipped with a spring 47 that returns the movable member 41 to an initial position while preventing the movable member 41 from being vibrated.

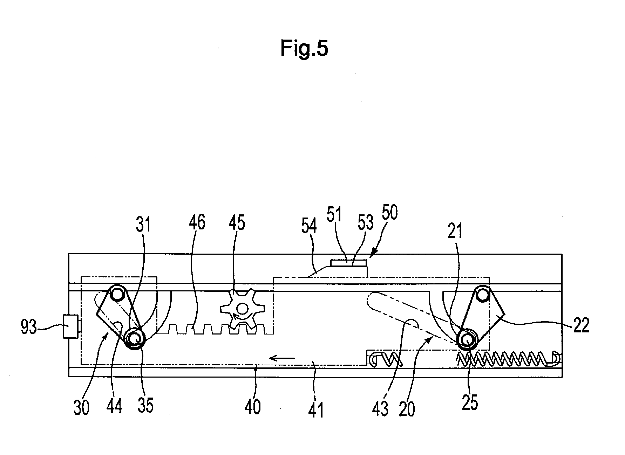

As illustrated in FIG. 4, the elevation assembly 40 guides the first and second slanted sections 43 and 44 to move up the first and second rollers 21 and 31 when the pinion 45 is rotated in a counterclockwise direction by the operation of the third loading motor 42, and thus, the movable member 41 moves to the right. As illustrated in FIG. 5, the elevation assembly 40 guides the first and second slanted sections 43 and 44 to move down the first and second rollers 21 and 31 when the pinion 45 is rotated in a clockwise direction by the operation of the third loading motor 42 and thus the movable member 41 moves to the left. In this manner, the elevation assembly 40 can simultaneously move up and down the first and second rollers 21 and 31 by moving the movable member 41 through the third loading motor 42.

As illustrated in FIGS. 1 and 2, the chucking unit 50 includes a lever 51 that is installed above the first cover 13 in a seesaw form, and a pressing member 52 that is rotatably installed on the lever 51 to press or release a top surface of the optical disc 1 toward or away from the chuck 16 and/or the spindle motor 15, and includes a center portion in line with the center of the chuck 16. Furthermore, the chucking unit 50 includes an extension 53 which extends from an upper portion of the movable member 41 to the lever 51, and a third slanted portion 54 provided on one end of the extension 53 so as to move the lever 51 up and down when the movable member 41 moves in forward and backward directions. The third slanted portion 54 allows a distal end 51 a of the lever 51 to move up and down. Thus, the lever 51 of the chucking unit 50 performs a seesaw movement by means of the third slanted portion 54 when the movable member 41 moves in forward and reverse directions, thereby pressing or releasing the top surface of the optical disc 1 while the pressing member 52 moves up or down.

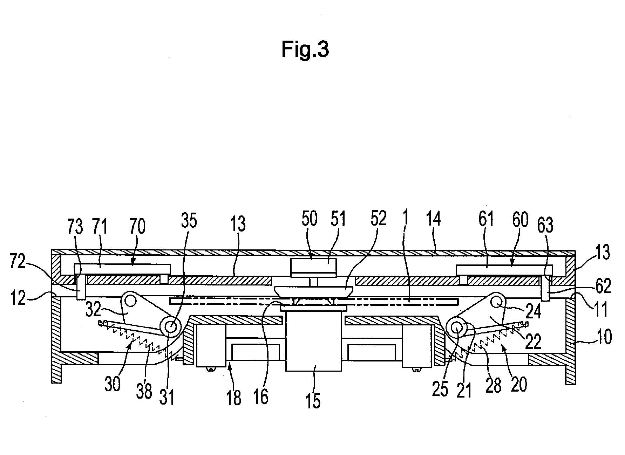

Therefore, as illustrated in FIGS. 2 and 4, when the first and second rollers 21 and 31 move up by the operation of the movable member 41, the pressing member 52 also moves up. In contrast, as illustrated in FIGS. 3 and 5, when the first and second rollers 21 and 31 move down by the operation of the movable member 41, the pressing member 52 moves down as well. Because the lever 51 has a seesaw shape, as illustrated in FIG. 4, when the distal end 51 a of the lever 51 which contacts the third slanted portion 54 moves down, the pressing member 52 moves up. As illustrated in FIG. 3, when the pressing member 52 moves down, the optical disc 1 is mounted on the chuck 16 of the spindle motor 15, and thus the first and second rollers 21 and 31 separate from the bottom surface of the optical disc 1. Therefore, the optical disc 1 can rotate when the spindle motor 15 operates.

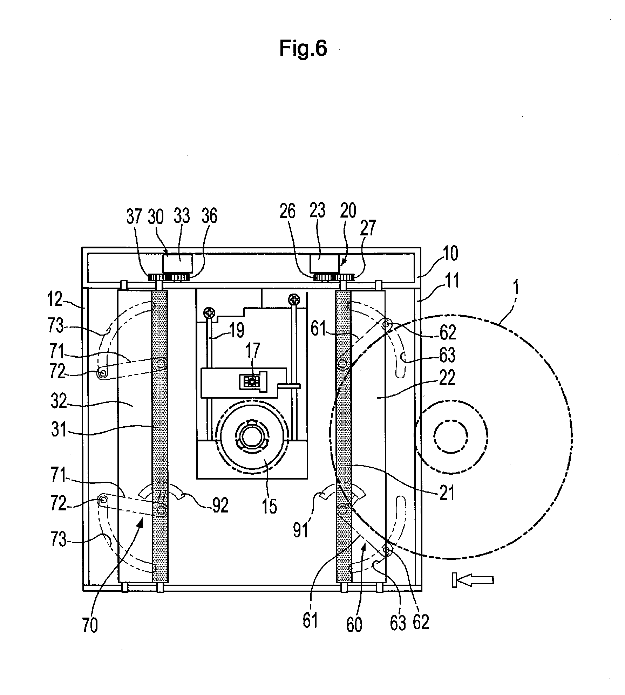

As illustrated in FIGS. 1 and 6, a first guide unit 60, which guides the optical disc 1 to be inserted and ejected through the first opening 11, is installed on the side of the first opening 11, while a second guide unit 70, which guides the optical disc 1 to be inserted and ejected through the second opening 12, is installed on the side of the second opening 12.

As illustrated in FIG. 1, the first guide unit 60 includes rotating levers 61 that are rotatably installed on opposite sides of a top surface of the first cover 13, and guide pins 62 that are provided on free ends of the rotating levers 61 respectively. Each guide pin 62 passes through an a guide slot 63 formed in the first cover 13 to make contact with an outer circumference of the optical disc 1 inserted through the first opening 11, and then extends into the first cover 13. The guide slot 63 may be an arc-shaped rotation guide slot. Further, the rotating levers 61 are supported by springs 64 to apply rotational force to the rotational levels 61 such that the guide pins 62 can make contact with the outer circumference of the optical disc 1.

The second guide unit 70 may differ from the first guide unit 60. However, the first guide slot 60 and the second guide unit 70 may be identical to each other since the second guide unit 70 is installed on the side of the second opening 12. The second guide unit 70 includes rotating levers 71, guide pins 72, rotation guide slots 73, and springs 74.

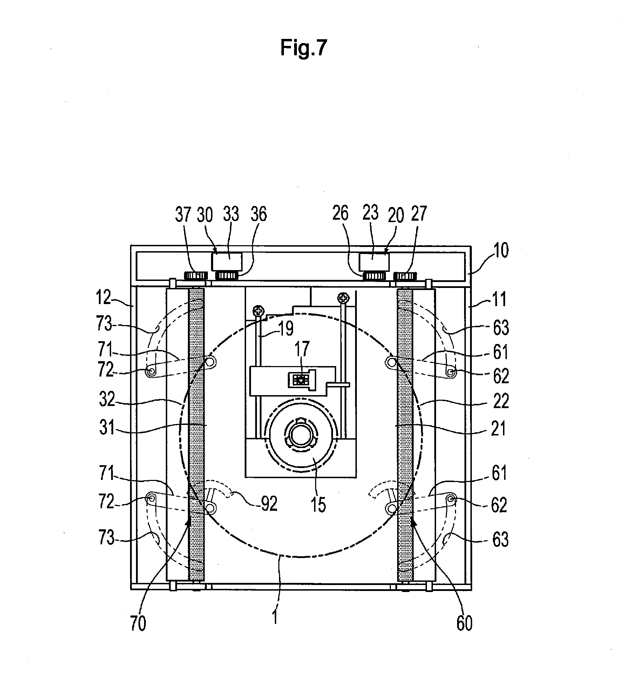

As illustrated in FIGS. 1 and 6, the first guide unit 60 allows the guide pins 62 of the rotating levers 61 to support an outer circumference of the optical disc 1 inserted through the first opening 11, thereby guiding insertion of the optical disc 1. In this case, the guide pins 62 of the opposite rotating levers 61 are pushed in opposite directions when the optical disc 1 is inserted into the main body 10, which causes the rotating levers 61 rotate. With reference to FIG. 1, as illustrated in FIG. 7, after the optical disc 1 is completely inserted into the main body 10, the opposite rotating levers 61 return to their original positions by means of elastic force of the springs 64. Accordingly, the opposite rotating levers 61 also return to their original positions by means of elastic force of the springs 64 when the optical disc 1 is ejected through the first opening 11 and when the second guide unit 70 is used with the side of the second opening 12.

Furthermore, the optical disc drive of the present general inventive concept includes a first sensor 91 to detect the optical disc 1 when it is inserted or ejected through the first opening 11, a second sensor 92 to detect the optical disc 1 when it is inserted or ejected through the second opening 12, and a third sensor 93 to detect whether the optical disc 1 is mounted on the chuck 16. As illustrated in FIGS. 1 and 6, the first sensor 91 includes a rotation angle sensor to detect rotation of one of the rotating levers 61 of the first guide unit 60, and the second sensor 92 also includes a rotation angle sensor to detect rotation of one of the rotating levers 71 of the second guide unit 70. Thus, when the optical disc 1 is inserted or ejected through the first and second openings 11 and 12, the first and second sensors 91 and 92 detect the rotation of the rotating levers 61 and 71 respectively, and thus insertion and ejection of the optical disc 1 can be detected. The third sensor 93 is installed on one side of the main body 10 to detect the movement of the movable member 41, as illustrated in FIGS. 1 and 5. Because the operation of the movable member 41 is related to the mounting of the optical disc 1, the third sensor 93 can detect the mounting state of the optical disc 1 by detecting the position of the movable member 41. The installation structures of the first, second and third sensors 91, 92 and 93 are illustrative purposes only. The present general inventive concept is not essentially limited to such installation structures. The first, second and third sensors 91, 92 and 93 may be implemented as optical sensors, which are installed on sides of the first opening 11, the second opening 12, and the spindle motor 15 respectively, and thereby directly detecting behaviors of the optical disc 1.

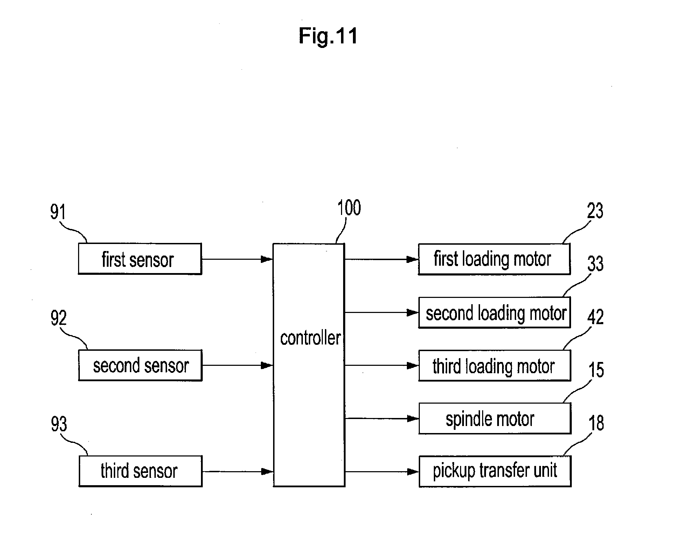

FIG. 11 is a control block diagram illustrating an optical disc drive according to the present general inventive concept. As illustrated in FIG. 11, the first and second sensors 91 and 92 detect the insertion and ejection of the optical disc 1 through the first and second openings 11 and 12, and then transmit the detected results to the controller 100. The third sensor 93 detects whether the optical disc 1 is mounted, and then sends the detected result to the controller 100. The controller 100 controls the first loading motor 23, the second loading motor 33, the third loading motor 42, the spindle motor 15, and the pickup transfer unit 18 on the basis of the detected information of the first, second and third sensors 91, 92 and 93.

Hereinafter, the operation and control method of the optical disc drive will be described.

As illustrated in FIG. 6, when the optical disc 1 enters the first opening 11, the first guide unit 60 guides the optical disc 1 when it is inserted into the first opening 11, and the first sensor 91 detects insertion of the optical disc 1 into the first opening 11 by detecting the rotation of the rotating levers 61. If the optical disc is inserted through the second opening 12, the second guide unit 70 guides the insertion of the optical disc1 when it is inserted, and the second sensor 92 detects the optical disc when it is inserted into the second opening 12.

As illustrated in FIG. 4, when it is detected that the optical disc 1 is inserted through the first opening 11, the movable member 41 moves to the right due to the operation of the third loading motor 42, so that the first and second rollers 21 and 31 move up. As illustrated in FIG. 2, after the first and second rollers 21 and 31 have been moved up, the first roller 21 is rotated by the operation of the first loading motor 23, thereby moving the optical disc 1 toward the chuck 16 of the spindle motor 15. If the optical disc is inserted through the second opening 12, the second roller 31 rotates by the operation of the second loading motor 33, thereby moving the optical disc 1 toward the chuck 16 of the spindle motor 15.

As illustrated in FIG. 5, after the optical disc 1 moves toward the chuck 16, the third loading motor 42 reversely rotates to move the movable member 41 to the left, thereby lowering the first and second rollers 21 and 31. The operation of the movable member 41 causes the pressing member 52 to be lowered, thereby pressing the top surface of the optical disc 1. As a result, the optical disc 1 is mounted on the chuck 16, and the first and second rollers 21 and 31 separate from the bottom surface of the optical disc 1. Thus, the optical disc 1 can rotate by means of operation of the spindle motor 15.

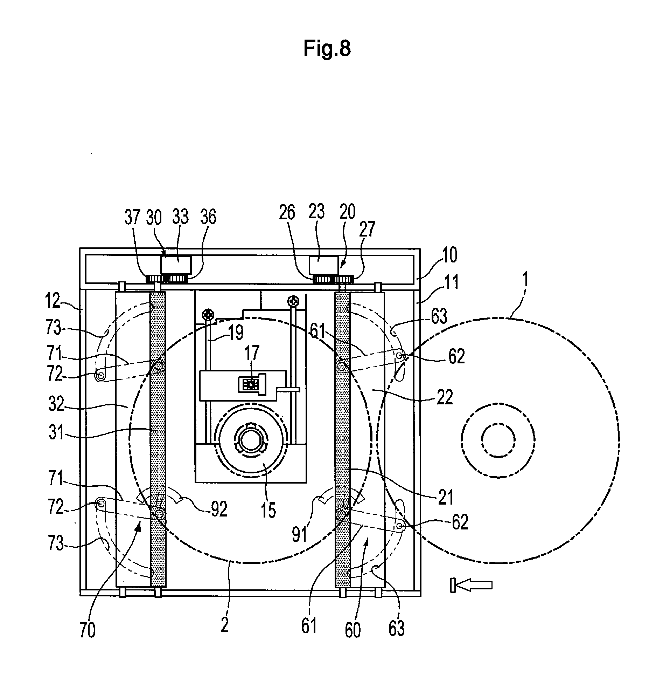

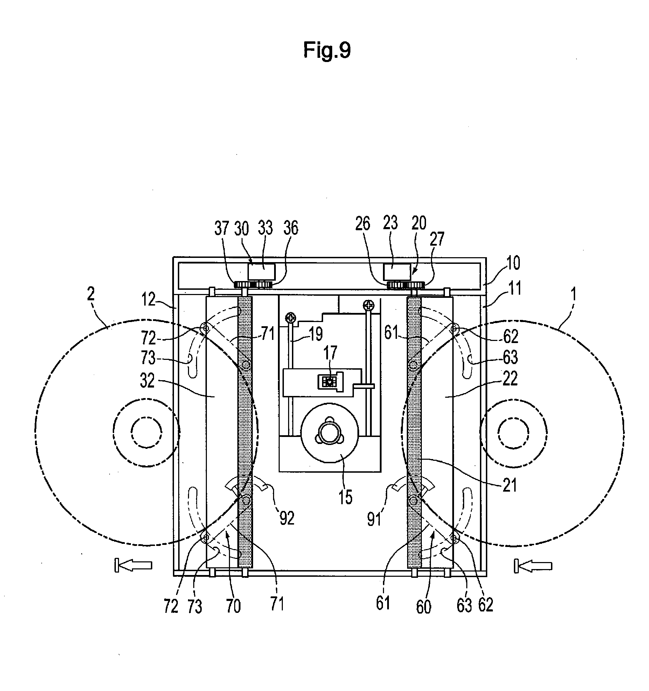

Referring to FIG. 1, as illustrated in FIG. 8, when a new optical disc 1 is inserted through the first opening 11 in a state in which an old optical disc 2 has been mounted in the main body 10, the internal old optical disc 2 is ejected through the second opening 12, as illustrated in FIG. 9. Specifically, the internal old optical disc 2 separates from the chuck 16 by means of an upward movement of the first and second rollers 21 and 31, and then the first and second loading motors 23 and 33 are simultaneously operated to rotate the first and second rollers 21 and 31 toward the second opening 12. Thus, the old optical disc 2 is ejected toward the second opening 12. As illustrated in FIG. 9, the new optical disc 1 is inserted into the main body 10 by the first roller 21, while the old optical disc 2 is ejected toward the second opening 12 by the second roller 31. While the old optical disc 2 is being ejected toward the second opening 12, the old optical disc 2 is detected by the second sensor 92, and thus the operation of the second roller 31 stops. When the second roller 31 stops operating the old optical disc 2 is prevented from falling down by allowing the old optical disc 2 to be caught by the second roller 31. Then, when the user removes the old optical disc 2 from the main body 10, the first roller 21 operates to insert the new optical disc 1 into the main body 10, so that the new optical disc 1 is mounted on the chuck.

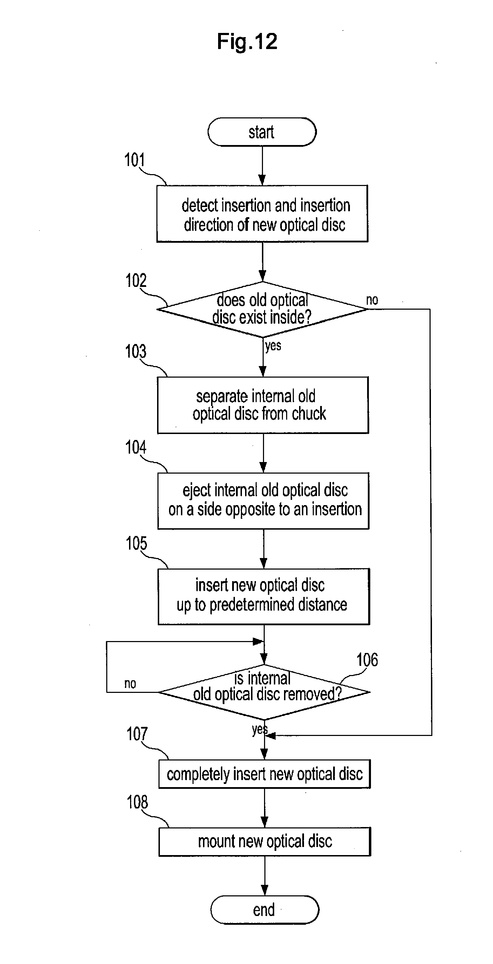

A control process related to the operation of the optical disc drive is illustrated in FIG. 12. As illustrated in FIG. 12, the controller 100 detects a new optical disc 1 when it is inserted into the main body 10 and the insertion direction of the new optical disc by the first and second sensors 91 and 92 (S101), and determines whether an old optical disc exists in the main body 10 by the third sensor 93 (S102).

In operation S102, if it is determined that the old optical disc does not exist in the main body 10, the third loading motor 42 and the first and second loading motors 23 and 33 operate to completely insert the new optical disc 1 toward the chuck 16 in the main body 10 (S107), and thereby the new optical disc 1 is mounted on the chuck 16 of the spindle motor 15 (S108).

In contrast, if it is determined that the old optical disc exists in the main body 10, the third loading motor 42 operates to move up the first and second rollers 21 and 31, and thereby the old optical disc 2 separates from the chuck 16 (S103). The first and second loading motors 23 and 33 operate the first and second rollers 21 and 31, thereby causing the old optical disc 2 to be ejected in a direction opposite to the new optical disc 1 (S104). Thus, the new optical disc 1 is inserted into a predetermined portion of the main body 10 (S105). As illustrated in FIG. 9, when a predetermined portion of the old optical disc 2 is ejected, and thus the old optical disc 2 is detected by any one of the first and second sensors 91 and 92, the operation of the first and second loading motors 23 and 33 stops in order to prevent the old optical disc 2 from separating from the main body 10, and to simultaneously prevent the new optical disc 1 from being further inserted into the main body 10.

The controller 100 determines whether the old optical disc 2 is removed from the main body 10 by one of the first and second sensors 91 and 92 (S106). At this time, the removal of the old optical disc 2 is carried out by a user. If the user does not remove the old optical disc 2, operation S106 is repeated.

In operation S106, when it is determined that the old optical disc 2 is removed, the controller 100 operates the first and second loading motors 23 and 33 to rotate the first and second rollers 21 and 31, and thereby the new optical disc 1 is completely inserted into the main body 10. Then, the third loading motor 42 operates to allow the new optical disc 1 to be mounted on the chuck 16 of the spindle motor 15. In step S108, the third loading motor 42 operates to move the movable member 41. The movement of the movable member 41 causes the first and second rollers 21 and 31 to move down so that the chucking unit 50 presses the top surface of the new optical disc 1. Thus, the optical disc 1 is mounted on the chuck 16.

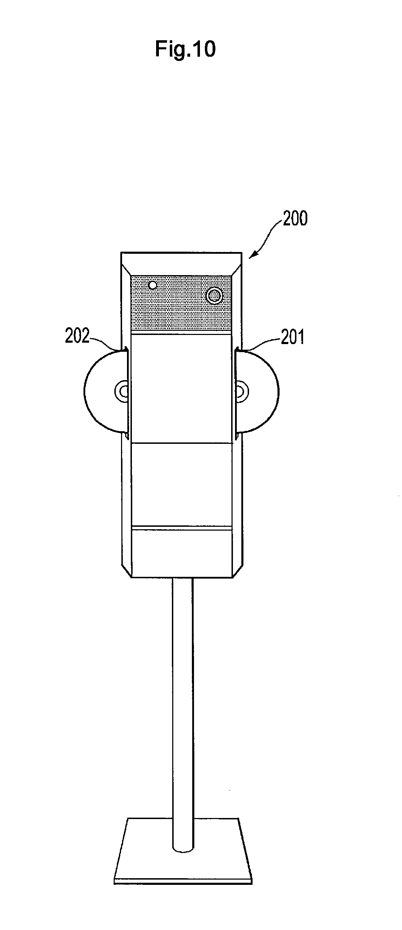

FIG. 10 illustrates an example of a stand-type audio and video appliance to which an optical disc drive according to the present general inventive concept is applied. An appliance 200 is provided on opposite sides thereof with first and second openings 201 and 202 for receiving and ejecting an optical disc. When the user inserts a new optical disc through the first opening 201 of the appliance 200, an old optical disc is ejected through the second opening 202. In contrast, when the user inserts the new optical disc through the second opening 202 of the appliance 200, the old optical disc is ejected through the first opening 201. Accordingly, the user can easily mount and exchange optical discs.

The optical disc drive according to preferred embodiments of the present general inventive concept can selectively receive or eject an optical disc through first and second openings formed on opposite sides of a main body, so that insertion and exchange of the optical disc can be easily achieved. When a new optical disc is inserted through a first opening, an old optical disc may be ejected through a second opening. In contrast, when the new optical disc is inserted through the second opening, the internal old optical disc is ejected through the first opening. Therefore, the insertion and ejection of the optical disc can be achieved at the same time. Furthermore, the old optical disc is caught in an ejection-side opening until it is removed by the user, so that the insertion and ejection of the optical disc can be performed at the same time, and the optical disc can be prevented from falling down when exchanging the optical disc.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An optical disc drive comprising:
a main body (10) provided on opposite sides thereof with first and second openings (11, 12) to receive and eject an optical disc (1);
a spindle motor (15) installed in the main body and having a chuck to mount the optical disc; and
a loading unit provided in the main body, to move the optical disc inserted through any one of the first and second openings toward the spindle motor, and to eject the optical disc on the spindle motor through the other one of the first and second openings.

2. The optical disc drive as claimed in claim 1, wherein the loading unit comprises:
a first roller assembly (20) installed on a side of the first opening (11);
a second roller assembly (20) installed on a side of the second opening (12); and
an elevation assembly (40) to mount and demount the optical disc (1) on and from the chuck (16) of the spindle motor (15).

3. The optical disc drive as claimed in claim 2, wherein:
the first roller assembly (20) comprises:
a first roller (21) which is movable up and down, and
a first loading motor (23) to rotate the first roller in forward and reverse directions; and
the second roller assembly (30) comprises:
a second roller (31) which is movable up and down, and
a second loading motor (33) to rotate the second roller in forward and reverse directions.

4. The optical disc drive as claimed in claim 3, wherein the elevation assembly (40) comprises:
a movable member (41) formed at both sides thereof with first and second slanted portions (43, 44) to move the first and second rollers (21, 31) up and down while moving in a transverse direction;
a third loading motor (42) connected with the movable member through a rack (46) and a pinion (45) to move the movable member; and
a chucking unit (50) that allows the optical disc (1) to be mounted on or demounted from the chuck according to a movement of the movable member.

5. The optical disc drive as claimed in claim 4, wherein the chucking unit (50) comprises:
a pressing member (52) that is movable up and down to press or release a top surface of the optical disc (1); and
a third slanted portion (54) formed on the movable member (41) to move the pressing member up and down.

6. The optical disc drive as claimed in any preceding claim, further comprising:
a first guide unit (60) that is installed on a side of the first opening (11) to guide the optical disc (1) when the optical disc is inserted or ejected through the first opening; and
a second guide (70) unit that is installed on a side of the second opening (12) to guide the optical disc when the optical disc is inserted or ejected through the second opening.

7. The optical disc drive as claimed in claim 6, wherein the first and second guide units (60, 70) comprise:
rotating levers (61, 71) rotatably installed on opposite sides of the first and second openings (11, 12);
guide pins (62) provided on free ends of the rotating levers, respectively, to make contact with an outer circumference of the optical disc (1) inserted or ejected through the first and second openings; and
elastic members (64) that apply a rotational force to the rotating levers to rotate the rotating levers such that the guide pins are brought into contact with the outer circumference of the optical disc.

8. The optical disc drive as claimed in claim 7, further comprising:
first and second sensors (91, 92) installed on the rotating levers (61) adjacent to the first and second openings (11, 12), respectively, to detect the optical disc (1) when the optical disc is inserted or ejected through the first and second openings, respectively.

9. The optical disc drive as claimed in claim 5, further comprising:
a third sensor (93) to detect a movement of the movable member (41) to detect a mounting state of the optical disc (1).

10. The optical disc drive as claimed in claim 1, further comprising:
first and second sensors (91, 92) to detect the optical disc (1) when the optical disc is inserted or ejected through the first and second openings (11, 12), respectively, and a third sensor (93) to detect whether the optical disc is mounted on the chuck (16) of the spindle motor (15).

11. A method of controlling an optical disc drive, the method comprising:
detecting a first optical disc (1) when the first optical disc is inserted into a main body (10) through one of first and second openings (11, 12) provided on opposite sides of the main body;
determining whether a second optical disc exists in the main body when the first optical disc is inserted through one of the first and second openings is detected; and
operating a loading unit installed in the main body to move and mount the first optical disc in the main body when the second optical disc does not exist in the main body.

12. A method of controlling an optical disc drive, the method comprising:
detecting a first optical disc when the first optical disc is inserted into a main body through one of first and second openings provided on opposite sides of the main body;
determining whether a second optical disc exists in the main body when insertion of the first optical disc through one of the first and second openings is detected;
operating a loading unit installed in the main body to eject the second optical disc through one of the first and second openings, which does not receive the first optical disc, while inserting the first optical disc into a predetermined portion of the main body;
detecting whether the second optical disc is removed from the main body; and
operating the loading unit to completely move and mount the first optical disc in the main body when the second optical disc is removed from the main body.

13. The method as claimed in claim 12, wherein the ejecting of the second optical disc (1) comprises stopping the operation of the loading unit when the second optical disc is detected through a sensor (91, 92) installed on a side of one of the first and second openings (11, 12) to prevent the second optical disc from being completely ejected from the main body (10).

14. A method of controlling an optical disc drive, the method comprising:
receiving an optical disc (1) through one of first and second openings (11, 12) disposed on opposite sides of a main body (10) to be mounted on a chuck (16) of a spindle motor (15); and
moving the optical disc to the spindle motor and ejecting the optical disc through the other on of the first and second openings of the main body.

15. A method of controlling a main body (10) of an optical disc drive, the method comprising:
receiving a first optical disc (1) in a first opening (11) in the main body; and
mounting the first optical disc onto a spindle motor (15) if a second optical disc is not mounted thereon, otherwise mounting the first optical disc onto the spindle motor after the second optical disc is demounted from the spindle motor and ejected from and ejecting the second optical disc from a second opening (12) in the main body.

16. The method of claim 15, wherein the receiving of the first optical disc (1) and the ejecting of the second optical disc comprises simultaneously receiving the first optical disc and ejecting the second optical disc.

17. An optical disc drive, comprising:
a main body (10) with a first and a second opening (11, 12);
a first sensor (91) to detect a first optical disc when it is inserted or ejected through the first opening;
a second sensor (92) to detect a second optical disc when it is inserted or ejected through the second opening; and
a third sensor (93) to detect a mounting state of the first or second optical disc.

18. The optical disc drive of claim 17, further comprising:
a first rotating lever (61) to contact an outside circumference of the first optical disc (1) upon insertion or ejection of the first optical disc; and
a second rotating lever (71) to contact an outside circumference of the second optical disc upon insertion or ejection of the second optical disc.

19. The optical disc drive of claim 18, further comprising:
a spindle motor (15) onto which the second optical disc is mounted; and
a movable member (41) to mount the second optical disc onto the spindle motor, or demount the second optical disc from the spindle motor, wherein the second optical disc is demounted from the spindle motor and ejected through the second opening (12) when the first optical disc is inserted through the first opening.

20. An optical disc drive comprising:
a main body (10) having a first opening (11) and a second opening (12);
a spindle motor (15) having a chuck; and
a loading unit to load an optical disc from the first opening to the chuck in a first direction and to unload the optical disc from the chuck to the second opening in a second direction.

21. The optical disc drive of claim 20, wherein the first direction and the second direction are the same.

22. The optical disc drive of claim 20 or claim 21, wherein the first opening (11) and the second opening (12) are disposed opposite to each other with respect to the chuck (16).

23. The optical disc drive of any one of claims 20-22, wherein the loading unit comprises:
a plurality of rollers (21, 31) to rotate and to move up and down to move the optical disc (1) toward or away from the chuck (16);
a pressing member (52) to move up and down and to mount the optical disc on the chuck; and
a movable member (41) to move horizontally with respect to the pressing member, to move the plurality of rollers and the pressing member up and down.

24. An optical disc drive, comprising:
a main body (10) with at least one opening;
a spindle motor (15) having a chuck (16); and
a loading unit to load a first optical disc from the at least one opening to the chuck in a first direction and to simultaneously unload a second optical disc from the chuck to the at least one opening (11, 12) in a second direction.

25. An optical disc drive, comprising:
a main body (10) with at least one opening (11, 12);
a sensor (91, 92) to detect when a first optical disc is inserted into the at least one opening; and
an ejecting member to eject a second disc from the at least one opening when the sensor detects the insertion of the first optical disc (1).

26. An optical disc drive, comprising:
a main body (10) with at least one opening;
a spindle motor (15) having a chuck;
a mounting member to mount a disc onto the chuck (16);
a sensor (91, 91) to detect when another optical disc is inserted into the at least one opening; and
an ejecting member to demount the mounted disc from the chuck and to eject the demounted disc from the at least one opening when the sensor detects the insertion of the another optical disc.
